**Europäisches Patentamt**

**European Patent Office**

**Office européen des brevets**

(11) Publication number: **0 238 250**
**A1**

## (12) EUROPEAN PATENT APPLICATION

(21) Application number: **87302058.0**

(22) Date of filing: **10.03.87**

(51) Int. Cl.⁴: **F 16 G 15/00**
**B 60 P 7/06, B 63 B 25/24**

(30) Priority: **21.03.86 GB 8607069**

(43) Date of publication of application:
**23.09.87 Bulletin 87/39**

(84) Designated Contracting States:
**AT BE CH DE ES FR GR IT LI LU NL SE**

(71) Applicant: **Dennison, Frank Alan**
**1 Constitution Rise Shooters Hill**
**London SE18 3RP (GB)**

(72) Inventor: **Dennison, Frank Alan**
**1 Constitution Rise Shooters Hill**
**London SE18 3RP (GB)**

(74) Representative: **Jones, Graham H.**
**Graham Jones & Company 77 Beaconsfield Road**
**Blackheath**
**London SE3 7LG (GB)**

(54) Chain tensioning apparatus.

(57) Chain tensioning apparatus (2) comprising a ratchet bar (4), a tensioning device (6) which is slidable along the ratchet bar (4), and a lever (8) for moving the tensioning device (6) along the ratchet bar (4) to increase the tension applied by the chain tensioning apparatus (2) and for releasing the tensioning device (6) from a locking position on the ratchet bar (4), the ratchet bar (4) comprising a plurality of teeth (10) provided along one edge (12) of the ratchet bar (4) and fastener means (14) which is provided at one end portion of the ratchet bar (4) and which is for engaging a chain, and the tensioning device (6) comprising at least one locking tooth (16) for engaging between a pair of the teeth (10) on the ratchet bar (4), abutment means (18) which is engaged by the lever (8) during use and which enables the lever (8) to operate with a pivoting action, and fastener means (24) which is for engaging a chain and which is so positioned on the tensioning device (6) that it causes the teeth (10) on the ratchet bar (4) and the said at least one locking tooth (16) to stay in locking engagement when the chain tensioning apparatus (2) is under tension.

FIG-1

Bundesdruckerei Berlin

**Description**

CHAIN TENSIONING APPARATUS

This invention relates to chain tensioning apparatus.

Chain tensioning apparatus is known and it is used, for example, for holding cargos on ships and for holding goods on lorries. There are several known different types of chain tensioning apparatus and they all tend to have one or more disadvantages. For example, one known piece of chain tensioning apparatus is known as a hook-up unit of a chain lash lever and, although this piece of chain tensioning apparatus is cheap to produce, it is of a rather crude design and it is fiddley in operation.

It is an aim of the present invention to provide chain tensioning apparatus which is of a simple yet efficient design, enabling the chain tensioning apparatus easily to be used and also to be manufactured at a cost which need not be much greater than the cost of manufacturing the above mentioned known hook-up unit.

Accordingly, this invention provides chain tensioning apparatus comprising a ratchet bar, a tensioning device which is slidable along the ratchet bar, and a lever for moving the tensioning device along the ratchet bar to increase the tension applied by the chain tensioning apparatus and for releasing the tensioning device from a locking position on the ratchet bar, the ratchet bar comprising a plurality of teeth provided along one edge of the ratchet bar and fastener means which is provided at one end portion of the ratchet bar and which is for engaging a chain, and the tensioning device comprising at least one locking tooth for engaging between a pair of the teeth on the ratchet bar, abutment means which is engaged by the lever during use and which enables the lever to operate with a pivoting action, and fastener means which is for engaging a chain and which is so positioned on the tensioning device that it causes the teeth on the ratchet bar and the said at least one locking tooth to stay in locking engagement when the chain tensioning apparatus is under tension.

The abutment means may be a pin. Alternatively, the abutment means may be a surface of a housing part of the tensioning device.

Preferably, the fastener means on the ratchet bar is on an opposite side of the chain tensioning apparatus to the fastener means on the tensioning device, whereby strain on the chain tensioning apparatus is caused to act through the chain tensioning apparatus. If desired, the fastener means on the ratchet bar can be on the same side of the chain tensioning apparatus as the fastener means on the chain tensioning device, but then the strain on the chain tensioning apparatus will tend to try and bend the chain tensioning apparatus which means that the chain tensioning apparatus may need to be made of heavier gauge material than might otherwise be the case.

Preferably, the lever is not attached to the ratchet bar or the tensioning device. It is envisaged that the lever will be carried by personnel operating the chain tensioning apparatus. The ratchet bar can thus be carried in a hand or can be fitted to a belt. The ratchet bar may be provided with an aperture for enabling it to be easily tied to a belt.

Alternatively, if desired, the lever may be attached to the tensioning device.

The chain tensioning apparatus may be one in which the lever has a first end portion which is provided with a tooth and a recessed part which are for use in moving the tensioning device along the ratchet bar to increase the tension, and in which the lever has a second end portion which has a curved abutment face for bearing on the top of the teeth on the ratchet bar and a recessed part for engaging with the abutment means, the curved abutment face and the recessed part being for use in releasing the tensioning device from a locking position on the ratchet bar.

Usually, the tooth on the first end portion will be a hard tooth, and the curved abutment face will be a hardened curved abutment face.

Preferably, the chain tensioning apparatus includes a locking pin for locking the tensioning device in position on the ratchet bar to stop the locking tooth on the tensioning device and the teeth on the ratchet bar from coming out of locking engagement during use.

The locking pin may be located in a pair of apertures in the tensioning device, the pair of apertures being in lugs which extend one on either side of the ratchet bar and below the ratchet bar so that the locking pin is underneath the ratchet bar when it is in the pair of apertures.

Preferably, the locking pin is secured to the tensioning device by a securing chain.

Preferably, the tensioning device has two or three of the locking teeth. This gives added security in the event that one of the teeth should become broken. The teeth also help to distribute the load.

It is preferred that the ratchet bar only has one of the fastener means. However, if desired, the ratchet bar may be provided with two of the fastener means which are so positioned that they face away from each other. The two fastener means may be employed when it is desired to employ the chain tensioning device in connecting together three different chain parts which are extending in different directions.

Preferably, the fastener means on the ratchet bar and the fastener means on the tensioning device are hooks. Other devices can be employed.

Advantageously, the chain tensioning apparatus is constructed to be relatively flat so that it will be robust in use. More specifically, the chain tensioning apparatus will often be lying around loading bays where it may be run over by lorries and so the flat construction helps to avoid undue strain being placed on the chain tensioning apparatus as it is run over by lorries or otherwise subjected to rought treatment.

The chain tensioning device will usually be made of a metal such for example as steel. The various teeth employed and also the operating end or the operating ends of the lever will usually be hardened, for example case hardened. The chain tensioning apparatus may be made in various ways, for example by forging or by a press operation.

An embodiment of the invention will now be described solely by way of example and with reference to the accompanying drawings in which:

Figure 1 is a side view, partly in section of chain tensioning apparatus; and

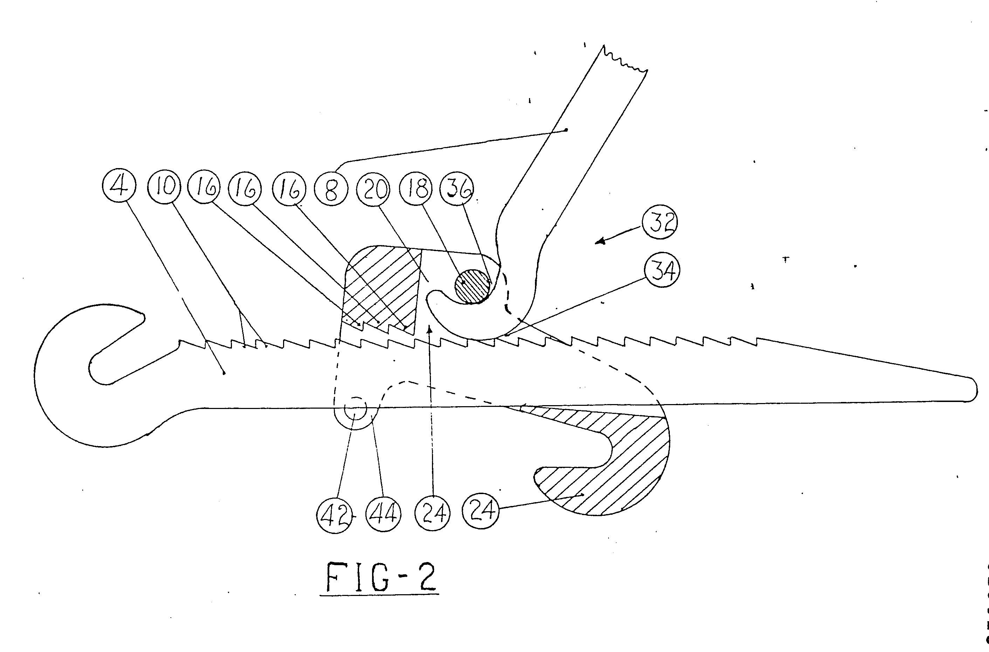

Figure 2 is a side view, partly in section and illustrates the release operation.

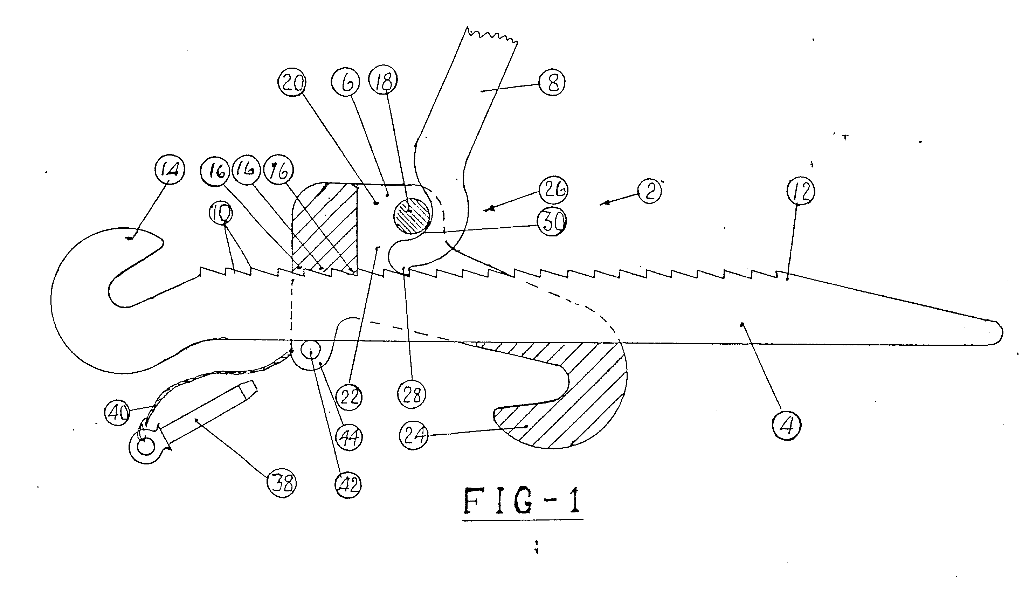

Referring to Figure 1, there is shown chain tensioning apparatus 2 comprising a ratchet bar 4, a tensioning device 6 which is slidable along the ratchet bar 4, and a lever 8 for moving the tensioning device 6 along the ratchet bar 4 to increase the tension applied by the chain tensioning apparatus, and for releasing the tensioning device 6 from a locking position on the ratchet bar 4.

The ratchet bar 4 comprises a plurality of teeth 10 provided along one edge 12 of the ratchet bar 4. The ratchet bar 4 also comprises fastener means in the form of a hook 14 which is provided at one end portion of the ratchet bar 4 and which is for engaging in a link of a chain (not shown).

The tensioning device 6 comprises three locking teeth 16. Each locking tooth 16 is for engaging between a pair of the teeth 10 on the ratchet bar 4. The tensioning device 6 also comprises abutment means in the form of a pin 18. The pin 18 extends between a pair of lugs 20 which define a recess 22 which is bridged by the pin 18. As will be explained hereinbelow the pin 18 enables the lever 8 to operate with a pivoting action.

The tensioning device 6 also comprises fastener means in the form of a hook 24 which is for engaging in a link of a chain and which is so positioned on the tensioning device 6 that it causes the teeth 10 on the ratchet bar 4 and the locking teeth 16 to stay in locking engagement when the chain tensioning apparatus 2 is under tension.

It will be seen that the hook 14 on the ratchet bar 4 is on an opposite side of the chain tensioning apparatus 2 to the hook 24 on the tensioning device 6. The hooks 14, 24 extend in opposite directions as shown and it will be appreciated that when they are both engaged in chain links and the chain tensioning apparatus 2 is under tension, then the strain through the chain tensioning apparatus 2 will be through the chain tensioning apparatus 2. If the hook 14 were to be positioned on the same side of the chain tensioning apparatus as the hook 24 and were to extend towards the hook 24, then it will be apparent that when the chain tensioning apparatus 2 was being used, then the strain on the chain tensioning apparatus 2 would tend to bend the chain tensioning apparatus 2 in half.

It will be seen from Figure 1 that the lever 8 is not attached to the ratchet bar 4 or to the tensioning device 6. It is envisaged that the ratchet bar 4 will be carried by personnel operating the chain tensioning apparatus. This avoids the need to provide each piece of chain tensioning apparatus 2 with its own lever 8 which obviously increases production costs. The lever 8 can be carried in a purpose made aperture in a belt or it can be provided with a hole (not shown) for enabling it to be tied to a belt.

It will be seen that the lever 8 has a first end portion 26 which is provided with a hardened tooth 28 and a recessed part 30. This first end portion 26 is for use in moving the tensioning device along the ratchet bar to increase the tension applied by the chain tensioning apparatus 2. More specifically, the tooth 28 locates between a pair of the teeth 10 on the ratchet bar 4, this pair of teeth 10 being in the vicinity of the pin 18. The recessed part 30 then extends around the pin 18 and the lever 8 can be pivoted in a clockwise manner to forceably slide the tensioning device 6 along the ratchet bar 4. When the lever 8 is removed, then the locking teeth 16 are allowed to lower back between the teeth 10 on the ratchet bar 4.

The lever 8 has a second end portion 32 which has a curved abutment face 34 which is hardened and which is for bearing on top of the teeth 10 on the ratchet bar 4. The second end portion 32 also has a recessed part 36 which is for engaging with the pin 18 when the lever 8 is reversed from the position shown in Figure 1. When the lever 8 is so reversed, the curved abutment face 34 bears on the teeth 10 as stated and the recessed part 36 engages the pin 18 and is effective to lift the tensioning device 6 upwardly and away from the ratchet bar 4. This brings the teeth 10,16 out of locking engagement and allows the ratchet bar 4 to slide through the tensioning device 6 to release the tension in the chain tensioning apparatus 2 and the chain or chains to which the chain tensioning apparatus 2 is attached. When the tension has been released, the lever 8 can be removed and the chain tensioning apparatus 2 is then ready for another chain tensioning operation.

The chain tensioning apparatus 2 includes a locking pin 38 which is attached to the tensioning device 6 by means of a retaining chain 40. The locking pin 38 is for locking the tensioning device 6 in position on the ratchet bar 4 to stop the locking teeth on the tensioning device 6 and the teeth 10 on the ratchet bar 4 from coming out of the locking engagement during use. This may happen when, for example, cargo loads settle and the chains become slack or when cargo loads shift and hit against each other or against the chain tensioning apparatus 2. The tensioning devices 6 can easily be tightened to take up any slack in the chains. The locking pin 38 is located in a pair of apertures 42 in the tensioning device 6. The pair of apertures 42 are provided with lugs 44 which extend one on either side of the ratchet bar 4 and below the ratchet bar 4 so that the locking pin 38 is underneath the ratchet bar 4 when it is in position in the pair of apertures 42.

The chain tensioning apparatus 2 will preferably be constructed of steel. It will be seen that the chain tensioning apparatus 2 is of simple yet effective and elegant construction. The chain tensioning apparatus 2 is easy to use. Furthermore, the chain tensioning apparatus 2 is constructed to be relatively flat without undue projections on either side so that in the event that it may be repeatedly run over by lorries during normal use, it is designed so as not to bend prematurely. The chain tensioning apparatus 2 can be made as a forging, casting or pressing, and it can be made relatively inexpensively.

It is to be appreciated that the embodiment of the invention described above has been given by way of example only and that modifications may be effected. Thus, for example, if it were desired to connect three chains together, then another hook like the hook 14 could be provided on the end of the ratchet bar 4, the said other hook extending in the opposite direction to the illustrated hook 14. Also, if desired, the shape of the ratchet bar 4 and also the shape of the tensioning device 6 can be varied. Only one locking tooth 16 need be employed but it is preferred to use two or three locking teeth 16 in case one of the locking teeth 16 should become broken. The pin 18 could be replaced by abutment means in the form of an abutment face on the tensioning device 6. In this case, the abutment means could be a lug. The lug may be hook shaped. Two abutment means may be provided with one abutment means being on either side of the chain tensioning apparatus 2 so that lever 8 can be operated from a chosen side of the chain tensioning apparatus 2, for example for ease of working in restricted conditions. If desired, the same end of the lever 8 may be used for moving the tensioning device 6 along the ratchet bar to increase the tension, and for releasing the tensioning device 6 from its locking position on the ratchet bar 4. The shape of the teeth 10 as shown in the drawings may be varied.

## Claims

1. Chain tensioning apparatus comprising a ratchet bar, a tensioning device which is slidable along the ratchet bar, and a lever for moving the tensioning device along the ratchet bar to increase the tension applied by the chain tensioning apparatus and for releasing the tensioning device from a locking position on the ratchet bar, the ratchet bar comprising a plurality of teeth provided along one edge of the ratchet bar and fastener means which is provided at one end portion of the ratchet bar and which is for engaging a chain, and the tensioning device comprising at least one locking tooth for engaging between a pair of the teeth on the ratchet bar, abutment means which is engaged by the lever during use and which enables the lever to operate with a pivoting action, and fastener means which is for engaging a chain and which is so positioned on the tensioning device that it causes the teeth on the ratchet bar and the said at least one locking tooth to stay in locking engagement when the chain tensioning apparatus is under tension.

2. Chain tensioning apparatus according to claim 1 in which the abutment means is a pin.

3. Chain tensioning apparatus according to claim 1 in which the abutment means is a surface of a housing part of the tensioning device.

4. Chain tensioning apparatus according to any one of the preceding claims in which the fastener means on the ratchet bar is on an opposite side of the chain tensioning apparatus to the fastener means on the tensioning device, whereby strain on the chain tensioning apparatus is caused to act through the chain tensioning apparatus.

5. Chain tensioning apparatus according to any one of the preceding claims in which the layer is not attached to the ratchet bar or the tensioning device.

6. Chain tensioning apparatus according to any one of the preceding claims in which the lever has a first end portion which is provided with a tooth and a recessed part which are for use in moving the tensioning device along the ratchet bar to increase the tension, and in which the lever has a second end portion which has a curved abutment face for bearing on the top of the teeth on the ratchet bar and a recessed part for engaging with the abutment means, the curved abutment face and the recessed part being for use in releasing the tensioning device from a locking position on the ratchet bar.

7. Chain tensioning apparatus according to any one of the preceding claims and including a locking pin for locking the tensioning device in position on the ratchet bar to stop the locking tooth on the tensioning device and the teeth on the ratchet bar from coming out of locking engagement during use.

8. Chain tensioning apparatus according to claim 7 in which the locking pin is located in a pair of apertures in the tensioning device, the pair of apertures being in lugs which extend one on either side of the ratchet bar and below the ratchet bar so that the locking pin is underneath the ratchet bar when it is in the pair of apertures.

9. Chain tensioning apparatus according to any one of the preceding claims in which the tensioning device has two or three of the locking teeth.

10. Chain tensioning apparatus according to any one of the preceding claims in which the fastener means on the ratchet bar and the fastener means on the tensioning device are hooks.

FIG-1

FIG-2

<table>
<tr><td colspan="4"><strong>EUROPEAN SEARCH REPORT</strong></td></tr>
</table>

European Patent Office

**EUROPEAN SEARCH REPORT**

Application number

EP 87 30 2058

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | BE-A- 758 040 (ENDENBURG'S SCHEEPSUITRUSTINGEN) * complete document * | 1,3-5, 9,10 | F 16 G 15/00 B 60 P 7/06 B 63 B 25/24 |
| A | | 6 | |
| X | FR-A-1 058 524 (R. CHANGEUR) * complete document * | 1,2,4, 5,7,9 | |
| A | DE-C- 913 760 (A. SCHMECK) * complete document * | 1,2,4, 5 | |
| A | DE-B-2 734 937 (DORNIER) * claim 1; figures 1-5 * | 1,2,4, 6 | TECHNICAL FIELDS SEARCHED (Int. Cl.4) |
| A | BE-A- 891 718 (INTERNATIONAL LASHING SYSTEMS LTD.) | | B 60 P 7/00 B 63 B 25/00 F 16 G 11/00 F 16 G 15/00 |

The present search report has been drawn up for all claims

| Place of search | Date of completion of the search | Examiner |
|---|---|---|
| BERLIN | 04-06-1987 | LEMBLE Y.A.F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82